# EUROPEAN PATENT APPLICATION

(11) **EP 4 434 861 A1**
(43) Date of publication of application: **25.09.2024**
(21) Application number: 23214291.9
(22) Date of filing: 05.12.2023
(51) Int. Cl.: B62J 7/04

(54) **REAR CARRIER WITH INCLINED ASSEMBLY STRUCTURE**

(30) Priority: 24.03.2023 CN 202320607572 U
(71) Applicant: Tenways Technovation Europe B.V., 1014 BA Amsterdam (NL)
(72) Inventor: HUANG, He, Shenzhen, 518000 (CN)
(74) Representative: Zaboliene, Reda

(57) **Abstract**

The application provides an inclined assembly structure for a loading rear carrier, which includes a rear carrier body, wherein two support rods inclined and bent to below the rear carrier body are fixed to the positions, close to front and rear side edges, of the bottom of the rear carrier body. According to the inclined assembly structure for the loading rear carrier of the application, when connecting plates are fixedly attached to butt plates, because the connecting plates are inclined relative to the rear carrier body, and a frame is connected to an external body when in actual use, the gravity generated when carrying heavy objects on the rear carrier body acts on contact surfaces of the connecting plates and the butt plates. Because the support rods are also inclined and bent and matched with the inclination of the connecting plates and the butt plates, the borne gravity is decomposed.

## Description

### CROSS-REFERENCE TO RELATED APPLICATIONS

This application claims priority to Chinese Patent Application No. 202320607572.0, filed on March 24, 2023, which are incorporated herein by reference in their entirety.

### TECHNICAL FIELD

The application relates to the technical field of bicycle rear carriers, and in particular to an inclined assembly structure for a loading rear carrier.

### BACKGROUND

With the progress of society, bicycles have gradually become a means of transportation for people to travel, and the use of the bicycles saves the physical strength of people, and at the same time, makes riders exercise their bodies. The arrangement of a bicycle rear carrier may help a user carry items that are too large or heavy, which is convenient for people to travel.

Chinese Patent Application No. CN206813167U discloses a bicycle rear carrier and a bicycle loading apparatus. The application relates to a bicycle rear carrier and a bicycle loading apparatus. The bicycle rear carrier includes a crossbar, a loading plate, and a spring clip. The crossbar includes a crossbar body and a first quick disassembly head. The crossbar body is provided with a plurality of first thread holes distributed in a length direction of the crossbar body, and the first quick disassembly head is arranged at one end, away from the first thread hole, of the crossbar body. The loading plate is slidably arranged on the crossbar body and the loading plate can move relative to the crossbar body in the length direction of the crossbar body. The spring clip is rotatably arranged on the loading plate, and is configured to clamp the items. The bicycle rear carrier is easy to operate and convenient to install, the position of a loading surface of the loading plate may be adjusted, and the arrangement of the spring clip plays a role in stabilizing and positioning small items. The bicycle loading apparatus includes the above bicycle rear carrier and a binding assembly. The binding assembly is combined with the rear carrier, so that various forms of items are carried to meet the loading needs of the user.

However, in the above apparatus, the loading plate is slidably arranged on the crossbar body and the loading plate can move relative to the crossbar body in the length direction of the crossbar body. The spring clip is rotatably arranged on the loading plate, and is configured to clamp the items, but when the rear carrier is assembled on the bicycle, it needs to be installed through a second quick disassembly head, and due to the adoption of buckle type butt joint, the bearing capacity at a joint is small, which easily causes damage to a connection when transporting heavy items.

In view of this, the application is proposed.

### SUMMARY

The technical problem to be solved by the application is to provide an inclined assembly structure for a loading rear carrier, so as to overcome the problems in the related art that when a rear carrier is assembled on a bicycle, the existing bicycle needs to be installed through a second quick disassembly head, and due to the adoption of buckle type butt joint, the bearing capacity at a joint is small, which easily causes damage to a connection when transporting heavy items.

In order to solve the above technical problems, the basic concept of the technical solution adopted by the application is as follows.

An inclined assembly structure for a loading rear carrier includes a rear carrier body. Two support rods inclined and bent to below the rear carrier body are fixed to the positions, close to front and rear side edges, of the bottom of the rear carrier body, and the two support rods located on one side of the rear carrier body form a group. A connecting plate is fixed between the ends of each group of two support rods. The two connecting plates are inclined relative to the rear carrier body, and two kidney slots are formed in the top of each of the two connecting plates. When the connecting plates are fixedly attached to butt plates, due to the fact that the two connecting plates are inclined relative to the rear carrier body, the borne gravity is decomposed, and a part of the gravity is dispersed to a frame through the inclined arrangement of the connecting plates and the butt plates.

Optionally, the frame is arranged below the rear carrier body. The two butt plates mutually attached to the two connecting plates are inclined and fixed to one side end of the frame. Threaded holes are formed in the tops of the two butt plates, and a connecting head is fixed to one side end of each of the two butt plates. A bayonet is formed in the other side end of each of the two connecting heads. The four threaded holes are correspondingly opposite to the four kidney slots. The connecting heads are arranged and the bayonet is formed in one side of each connecting head, so that the whole rear carrier is convenient for butt joint and clamping when being installed on an external bicycle body.

Optionally, the interior of each of the four kidney slots is provided with an inclined locking bolt, and the ends of the four inclined locking bolts correspondingly extend to the interiors of the threaded holes. A fixed plate is fixed to one side end of the rear carrier body, a mounting plate is fixed to one side end of the fixed plate, and a reflective plate is installed on the mounting plate. The connecting plates are mutually attached to the butt plates, and at the same time, the four threaded holes are correspondingly opposite to the four kidney slots, so that the rear carrier body is quickly installed through the inclined locking bolts at corresponding positions of the four kidney slots during installation.

After adopting the technical solution, the application has the following beneficial effects compared with the related art. Of course, any product implementing the application does not necessarily need to achieve all the advantages described below at the same time.
1. According to the inclined assembly structure for the loading rear carrier of the application, when the connecting plates are fixedly attached to the butt plates, because the connecting plates are inclined relative to the rear carrier body, and the frame is connected to the external bicycle body when in actual use, the gravity generated when carrying heavy objects on the rear carrier body acts on contact surfaces of the connecting plates and the butt plates. Furthermore, because the support rods are also inclined and bent and matched with the inclination of the connecting plates and the butt plates, the borne gravity is decomposed, and a part of the gravity is dispersed to the frame through the inclined arrangement of the connecting plates and the butt plates, so as to ensure that the butt plates at the bottom cannot bear large gravity at joints.
2. According to the inclined assembly structure for the loading rear carrier of the application, the connecting plates are mutually attached to the butt plates, and at the same time, the four threaded holes are correspondingly opposite to the four kidney slots, so that the rear carrier body is quickly installed through the inclined locking bolts at corresponding positions of the four kidney slots during installation. Height adjustment may also be performed at different slot positions to adapt to the differences between different goods or children with different heights.

### BRIEF DESCRIPTION OF THE DRAWINGS

The drawings described below are only some embodiments. Other drawings may further be obtained by those of ordinary skill in the art according to these drawings without creative efforts. In the drawings:
Fig. 1 is a main view of a stereoscopic structure of an inclined assembly structure for a loading rear carrier provided by the application.
Fig. 2 is a side view of a stereoscopic structure of an inclined assembly structure for a loading rear carrier provided by the application.
Fig. 3 is a schematic diagram of a stereoscopic structure of a frame in an inclined assembly structure for a loading rear carrier provided by the application.

### DETAILED DESCRIPTION OF THE EMBODIMENTS

The application is further described now with reference to the drawings.

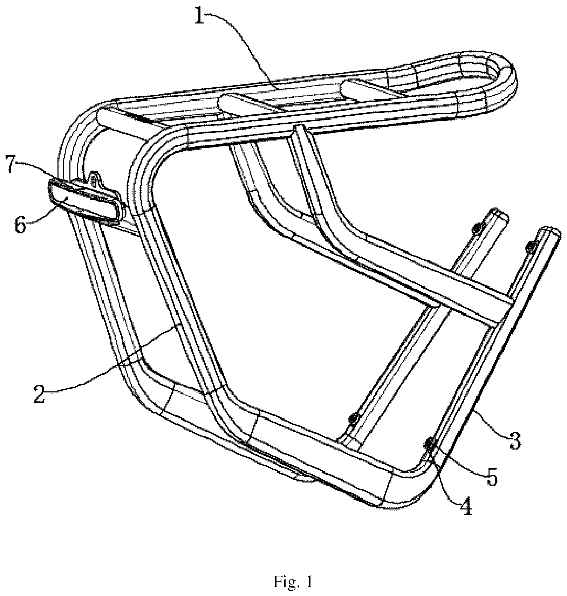

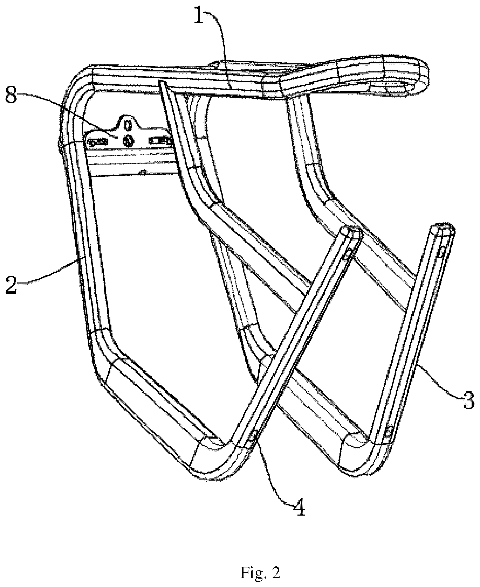

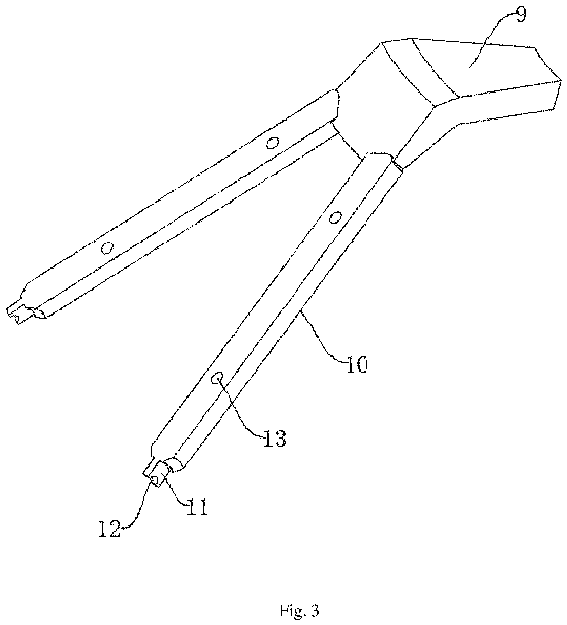

Embodiment 1, as shown in Figs. 1 to 3, the application provides a technical solution of an inclined assembly structure for a loading rear carrier, including a rear carrier body 1. Two support rods 2 inclined and bent to below the rear carrier body 1 are fixed to the positions, close to front and rear side edges, of the bottom of the rear carrier body 1, and the two support rods 2 located on one side of the rear carrier body 1 form a group. A connecting plate 3 is fixed between the ends of each group of two support rods 2. The two connecting plates 3 are inclined relative to the rear carrier body 1, and two kidney slots 4 are formed in the top of each of the two connecting plates 3.

The effects achieved by the whole Embodiment 1 are that: when the apparatus is used, the connecting plates 3 are fixedly attached to the butt plates 10, because the connecting plates 3 are inclined relative to the rear carrier body 1, and the frame 9 is connected to an external bicycle body when in actual use, the gravity generated when carrying heavy objects on the rear carrier body 1 acts on contact surfaces of the connecting plates 3 and the butt plates 10.

Because the support rods 2 are also inclined and bent and matched with the inclination of the connecting plates 3 and the butt plates 10, the borne gravity is decomposed, and a part of the gravity is dispersed to the frame 9 through the inclined arrangement of the connecting plates 3 and the butt plates 10, so as to ensure that the butt plates 10 at the bottom cannot bear large gravity at joints.

The problems that when the rear carrier is assembled on the bicycle, the existing bicycle needs to be installed through a second quick disassembly head, and due to the adoption of buckle type butt joint, the bearing capacity at the joint is small, which easily causes damage to a connection when transporting heavy items, are solved.

Embodiment 2, as shown in Figs. 1 to 3, the frame 9 is arranged below the rear carrier body 1. The two butt plates 10 mutually attached to the two connecting plates 3 are inclined and fixed to one side end of the frame 9. Threaded holes 13 are formed in the tops of the two butt plates 10, and a connecting head 11 is fixed to one side end of each of the two butt plates 10. A bayonet 12 is formed in the other side end of each of the two connecting heads 11. The four threaded holes 13 are correspondingly opposite to the four kidney slots 4. The interior of each of the four kidney slots 4 is provided with an inclined locking bolt 5, and the ends of the four inclined locking bolts 4 correspondingly extend to the interiors of the threaded holes 13. A fixed plate 8 is fixed to one side end of the rear carrier body 1, a mounting plate 7 is fixed to one side end of the fixed plate 8, and a reflective plate 6 is installed on the mounting plate 7.

The effects achieved by the whole Embodiment 2 are that: the connecting plates 3 are mutually attached to the butt plates 10, and at the same time, the four threaded holes 13 are correspondingly opposite to the four kidney slots 4, so that the rear carrier body 1 is quickly installed through the inclined locking bolts 5 at corresponding positions of the four kidney slots 4 during installation. Height adjustment may also be performed in different slot positions to adapt to the differences between different goods or children with different heights. The connecting heads 11 are arranged and the bayonet 12 is formed in one side of each connecting head 11, so that the whole rear carrier is convenient for butt joint and clamping when being installed on an external bicycle body.

The application is not limited to the above implementations, and any person should be aware of structural changes made under the inspiration of the application, and any technical solutions identical or similar to the application shall fall within the scope of protection of the application. The technologies, shapes and structural parts of the application not described in detail are all known technologies.

## Claims

1. An inclined assembly structure for a loading rear carrier, comprising a rear carrier body, wherein two support rods inclined and bent to below the rear carrier body are fixed to the positions, close to front and rear side edges, of the bottom of the rear carrier body, and the two support rods located on one side of the rear carrier body form a group; a connecting plate is fixed between the ends of each group of two support rods; and the two connecting plates are inclined relative to the rear carrier body, and two kidney slots are formed in the top of each of the two connecting plates.

2. The inclined assembly structure for the loading rear carrier according to claim 1, wherein a frame is arranged below the rear carrier body; and two butt plates mutually attached to the two connecting plates are inclined and fixed to one side end of the frame.

3. The inclined assembly structure for the loading rear carrier according to claim 2, wherein threaded holes are formed in the tops of the two butt plates, and a connecting head is fixed to one side end of each of the two butt plates.

4. The inclined assembly structure for the loading rear carrier according to claim 3, wherein a bayonet is formed in the other side end of each of the two connecting heads; and the four threaded holes are correspondingly opposite to the four kidney slots.

5. The inclined assembly structure for the loading rear carrier according to claim 3, wherein the interior of each of the four kidney slots is provided with an inclined locking bolt, and the ends of the four inclined locking bolts correspondingly extend to the interiors of the threaded holes.

6. The inclined assembly structure for the loading rear carrier according to claim 1, wherein a fixed plate is fixed to one side end of the rear carrier body, a mounting plate is fixed to one side end of the fixed plate, and a reflective plate is installed on the mounting plate.
